Europäisches Patentamt

European Patent Office

Office européen des brevets

(11) Publication number: **0 140 904**
**B1**

# EUROPEAN PATENT SPECIFICATION

(45) Date of publication of patent specification: **10.08.88**

(21) Application number: **84901092.1**

(22) Date of filing: **08.03.84**

(86) International application number:
**PCT/HU84/00013**

(87) International publication number:
**WO 84/03419 13.09.84 Gazette 84/22**

(51) Int. Cl.⁴: **A 01 N 43/12,** A 01 N 55/02,
A 01 N 55/08, A 01 N 57/20,
C 05 G 3/00, C 05 F 11/10

(54) **PROCESS AND COMPOSITION FOR PLANT GROWTH REGULATION.**

(30) Priority: **08.03.83 HU 79783**

(43) Date of publication of application:
**15.05.85 Bulletin 85/20**

(45) Publication of the grant of the patent:
**10.08.88 Bulletin 88/32**

(84) Designated Contracting States:
**AT CH DE FR GB LI NL SE**

(56) References cited:
**FR-A-2 322 544**
**FR-A-2 460 111**

The file contains technical information
submitted after the application was filed and
not included in this specification

(73) Proprietor: **NITROKEMIA IPARTELEPEK**
**Pf. 45**
**H-8184 Füzfögyártelep (HU)**

(72) Inventor: **KARSAI, József**
**24, Ország u.**
**H-2481 Velence (HU)**
Inventor: **SEBESTYEN, Jószef**
**40, Lenin ut**
**H-2484 Agárd (HU)**
Inventor: **GAAL, Sándor**
**1/b, Kinizsi ut**
**H-2315 Szigethalom (HU)**
Inventor: **GARDI, Iván**
**5, Sramli u.**
**H-1039 Budapest (HU)**
Inventor: **KIS, György**
**26/a, Damjanich u.**
**H-1071 Budapest (HU)**
Inventor: **PAPP, András**
**56, Bókay A. ut**
**H-1181 Budapest (HU)**
Inventor: **BALINT, Sándor**
**7, Stromfeld u.**
**H-8200 Veszprém (HU)**
Inventor: **BENCZIK, Judit née PASZTOR**
**10, Petófi u.**
**H-8220 Balatonalmádi (HU)**

EP 0 140 904 B1

**0 140 904**

(72) Inventor: **KOLONICS, Zoltán**
**61, Bajcsy Zs. u.**
**H-8220 Balatonalmádi (HU)**
Inventor: **TÖMÖRDI, Elemér**
**Botev utca 4/b**
**H-8200 Veszprém (HU)**

(74) Representative: **von Füner, Alexander, Dr. et al**
**Patentanwälte v. Füner, Ebbinghaus, Finck**
**Mariahilfplatz 2 & 3**
**D-8000 München 90 (DE)**

## Description

The present invention concerns a process and a composition for regulating the growth of field plants by combined treatment.

Synthetic compounds, first of all beta - 3 - indolyl - 3 - acetic acid and derivatives thereof having auxin activity are known to act through the leaves or root of the plant. These compounds can be used as plant growth regulators but their effectivity is relatively low as the auxin type compounds are rapidly decomposed in the plant cells by peroxyidase type enzymes.

Another group of the compositions stimulating the inner synthesis of auxins (auxin-inductors) is formed by 2-chloroethyl phosphonic acid and derivatives thereof. According to FR—A—2 322 544 these compounds among others show auxin activity, (increase plant growth), influence seed germination, stimulate fruit ripening and flowering, interact with known plant growth regulators, increase resistance against plant diseases etc. When using 2-chloroethyl phosphonic acid the releasing ethylene induces the inner auxin synthesis. By the increased plant hormone level the synthesis of enzymes controlling physiological processes is also enhanced e.g. the activity of decomposing enzymes (peroxidases). Due to this effect the required amount of 2-chloroethyl phosphonic acid is higher per hectare and if the treatment is not carried out in a suitable growth stage of the plants then depression, withering, and necrotic symptoms may occur.

Disclosure of the invention

The present invention is directed to regulating the growth of monocotyledonous and dicotyledonous field plants and suitable compositions for controlling plant growth without harmful side effects (without phytotoxicity).

According to the present invention the field plants, growth is controlled by treating said plants in the vegetative stage at a rate of 0.3 to 4.0 kg kg/ha with 2,2 - dimethyl - 2,3 - dihydro - 7 - hydroxy - benzofuran or 2,2 - dimethyl - 2,3 - dihydro - 3 - keto - 7 - hydroxy - benzofuran and simultaneously or subsequently with 0.5—5.0 liter of water soluble salts or metal chelates containing micro and/or mesoelements at a concentration of 5—500 g/liter. As micro- and mesoelements, namely sulphur in the sulphate form, boron, magnesium, manganese, copper, zinc and molybdenum are used. From the salts of the microelements the suitable compositions can be prepared by using complex forming acids, such as ethylene diamine tetraacetic acid, nitrilotriacetic acid, citric acid, acetic acid, K-paraphenollignosulfonate or glycine. As a further active ingredient 2-chloroethyl phosphonic acid and esters or salts thereof have to be applied simultaneously or previously at a rate of 0.5 to 3.0 kg/ha. One proceeds by treating the plants simultaneously with several active ingredients or when using more active ingredients the plant is first treated with 2-chloroethyl phosphonic acid, then with benzofuran derivatives and micro- and/or mesoelements. As a result of the treatment with higher doses both for monocotyledonous and dicotyledonous field plants a depression of growth occurs, in other cases the growth or the fruit yield can be increased. It is important to treat the plants with the mentioned active ingredients in the vegetative stage otherwise the desired effect cannot be achieved.

Preferably the plants are treated with a diluted composition. Also the crops may be treated at the latest until the appearance of the second node, i.e. 1 or 1.5 cm height of ear.

The invention encompasses also the compositions which can be used for regulating the growth of plants and contain 1 to 60% by weight of 2,2 - dimethyl - 2,3 - dihydro - 7 - hydroxy - benzofuran or 2,2 - dimethyl - 2,3 - dihydro - 3 - keto - 7 - hydroxy - benzofuran as well as micro- and/or mesoelements in the form of soluble salts or chelates, namely sulphur in the sulphate form, boron, magnesium, magnanese, copper, zinc and molybdenum optionally together with 2-chloroethyl phosphonic acid and salts or esters thereof. The compositions may contain urea or ammonium salt, solid and/or liquid carrier and optionally surfactants as well. Among solid carriers kaolin, bentonite, silicagel, dolomite, calcium carbonate, talc, and among liquid carriers aromatic, cycloaromatic solvents, mineral oil fractions and alcohols can be mentioned. Surfactants can be nonionic and anionic, as anionic surfactants, salts of aliphatic sulfonic acid esters, sodium salt of lauryl sulphate, salts of aromatic sulfonated compounds, such as sodium salt of dodecyl benzene sulfonate, sodium salts of lignosulfonate and as non-ionic surfactants fatty alcohol derivatives of ethylene oxide or propylene oxide, fats and oils, alkyl phenols, polyethoxylated or oxypropylated derivatives thereof can be employed. The compositions can be formulated as emulsifiable concentrates, wettable powders or dusting agents, and the concentrated compositions are diluted prior to use to 0.01—5% sprayable diluted compositions. The doses of the compositions is 2—5 kg per hectare, but lower and higher doses may be used as well for special purposes.

As monocotyledonous plants the crops, corn and as dicotyledonous plants, sunflower, cole-seed, sugar beet, soya, peas, and beans are mentioned. When treating crops the composition can be used at the latest until the appearance of the second node, in case of corn until 8 leaf stage of the corn, i.e. until the start of the differentiation of the growing cone. When treating sunflower the compositions are used at a 6—8 pairs leaf stage until the termination of receptacle formation.

We have found that the benzofuran derivatives together with 2-chloroethyl phosphonic acid show excellent plant growth regulating activity, if the microelements and mesoelements required for these processes are present, which upon penetrating into the plant form a biologically active complex with the enzyme protein, thus the hormone and enzyme level of the plant can be brought into equilibrium and the depression accompanying the use of plant growth regulators can be eliminated in case of proper use.

The plant growth regulators according to the present invention are generally employed in the form of tank mixtures, prepared from emulsifiable concentrates, wettable powders and microelement chelated optionally by adding urea and ammonium salts.

Micro- and mesoelements are generally used in the form of chelates such as magnesium chelate at a concentration of 40 g/l, manganese chelate at a concentration of 30 g/l, copper chelate at a concentration of 40 g/l, zinc chelate at a concentration of 30 g/l, boron in the form of boric acid at a concentration of 7 g/l, sulphur (in the form of a sulphate) in ammonium sulphate solution of a concentration of 300 g/l, and molybdenum in ammonium molybdenate solution of a concentration of 3 g/l. The complexes of microelements are usually added in the form of tank mixture to the other active ingredients.

Modes of embodiment of the invention

Emulsifiable concentrates, wettable powder mixtures and dusting agents can be prepared as disclosed in the following Examples:

Example 1

A mixture of 25 g. of 2,2 - dimethyl - 2,3 - dihydro - 7 - hydroxy - benzofuran and 25 g. of 2-chloroethyl phosphonic acid is dissolved in 30 g. of xylene. 10 g. of an adduct prepared from 8 to 10 moles of ethylene oxide and 1 mole of oleic acid - N - monoethanol - amide, 5 g. of calcium salt of dodecyl benzene sulfonic acid, 5 g. of an adduct prepared from 40 moles of ethylene oxide and 1 mole castor oil are added. If this solution is diluted with 1150 g of water and the active ingredient is dispersed in the aqueous medium then an aqueous composition is obtained containing 2% by weight of the active ingredients. To this composition chelates of the micro- and mesoelements and water soluble salts thereof respectively and if desired urea can be added.

When preparing emulsifiable concentrates xylene may be replaced by a 2:1 mixture of cyclohexanone and isobutanol as a solvent and as a surfactant ethoxylated oleic acid - N - monoethanol - amide can be replaced by an adduct prepared of 7 moles of ethylene oxide and 1 mole of isooctylphenol.

Xylene can be replaced by a mixture of xylene and a mineral oil fraction boiling at 210—280°C. Ethoxylated or oxypropylated castor oil can be admixed with calcium salt of dodecyl benzene sulfonic acid as surfactant.

As non-ionic surfactants adducts prepared of 40 moles of ethylene oxide and 1 mole of lauric acid, adducts prepared of 1 mole oleic alcohol and 30 moles of ethylene oxide or 10 moles of propylene oxide and adducts prepared of 8 moles of ethylene oxide and 1 mole of nonylphenol can be used.

Example 2

In order to prepare a dusting agent 1.5 g. 2,2 - dimethyl - 2,3 - dihydro - 7 - hydroxy - benzofuran and 1.5 g. of 2-chloroethyl phosphonic acid are homogenised with 97 g. of pulverised kaolin and thereafter the mixture is ground. The obtained dusting agent contains 1.5% by weight of biologically active agents.

Example 3

For the preparation of a wettable powder composition containing 25% by weight of biologically active ingredient 25 g of 2,2 - dimethyl - 2,3 - dihydro - 7 - hydroxy - benzofuran and 25 g. of 2-chloroethyl phosphonic acid are admixed with 3 g. sodium salt of diisobutyl naphthalene sulfonic acid, 5 g. sodium salt of ligninsulfonic acid and 42 g. of kaolin.

As surfactants an adduct of 40 moles of ethylene oxide and 1 mole of nonyl phenol, a condensate of molar ratio of 2:1 of sodium salt of naphthalene sulfonic acid and formaldehyde, an adduct of 20 moles ethylene oxide and 20 moles of propylene oxide with 1 mole of nonyl phenol, calcium salt of ligninsulfonic acid. can be used. Kaolin can be replaced by silicic acid or synthetic silicic acid.

The biological activity of the process and compositions according to the invention was tested on sunflower and corn plants. The tests were carried out in green-house and in fields. In the course of green-house tests 6 kg. of glass factory sand was filled into Mitscherlich culture dishes, the entire water capacity of which had been previously determined. The sand was continuously watered with Knopp nutrient solution used every week in an amount of 100 cm³ per culture dish. The water loss of the sand was compensated to 70% water capacity. The test was repeated six times, to each dish 6 grains were seeded, the plant number in each dish was 4 after emergence. The treated sunflower was of type Marianne and the corn was of type SzET-255. Sunflower was treated at a stage having 1 pair of real leaves and corn was treated at a stage having 2 pairs of real leaves, with a composition containing benzofuran derivative or 2-chloroethyl phosphonic acid, whereafter the height was determined at 3 pairs real leaf stage for sunflower and at 6 pairs leaf stage for corn. Field tests were carried out on the same plants as in the green-house tests on lime coated "cernozjom" soil. Plants were seeded in the middle of April, row distance of corn and sunflower: 50—50 cm., stock distance was 20 cm., size of plots: 2×15 m., tests were repeated four times. Corn plants were treated at 90—100 cm. age and sunflower was treated at 6 pairs leaf stage. Benzofuran-derivatives were used in the form of a 25% by weight active ingredient containing emulsifiable concentrate and 2-chloroethyl phosphonic acid is used in an emulsifiable concentrate containing 40% by

4

weight of active ingredient, and microelements were used in the above mentioned composition forms. In variant A) 2 liter/ha and 0.5 l/ha doses were used except for the untreated control.

The change of height of the plants were determined on the 10th day following the day of the treatments on the basis of 50 repeated test-results. There was no difference in the stock number of the treated and untreated plots, stocknumber of sunflower: 78 000 stocks/ha and stocknumber of the corn: 92 000 stocks/ha. In variant B) the sunflower was treated on June 3rd at 3—4 pairs leaf stage and the height was measured on August 1st on the basis of the data of 50 plants for each repetition. 1000 achene weight was determined for each repetition on the basis of 40×100 achene and the weight per plate was determined on the basis of 15 plates for each repetition. Corn was treated according to variant B) on July 10th at 50—60 cm. stage of the plants and the height of the plants was determined on September 2nd by measuring the height of 50 plants for each repetition. 1000 grain weight and the grain weight per cornear can be determined upon harvesting similarly as for sunflowers.

In the Table 2-chloroethyl phosphonic acid will be referred to as A) and furan derivative as B). In Table 1 greenhouse test results are shown, the tests were carried out to demonstrate the effect of active ingredients A) and B) upon the height of corn and sunflower.

TABLE 1

| | (B) Active ingredient | | | | (A) | | | |
| | Sunflower | | Corn | | Sunflower | | Corn | |
| Concentration | cm. | % | cm. | % | cm. | % | cm. | % |
| --- | --- | --- | --- | --- | --- | --- | --- | --- |
| Control | 83.9 | 100.0 | 66.8 | 100.0 | 83.9 | 100.0 | 66.8 | 100.0 |
| 10% | — | — | — | — | — | — | — | — |
| 5% | 40.5 | 48.3 | 53.7 | 80.4 | 33.6 | 40.0 | 47.9 | 71.7 |
| 3.3% | 66.2 | 78.9 | 61.3 | 91.8 | 72.4 | 86.3 | 55.6 | 83.2 |
| 2.5% | 72.6 | 86.5 | 78.7 | 117.8 | 70.8 | 84.4 | 83.9 | 95.6 |
| 2.0% | 99.3 | 118.4 | 76.9 | 115.1 | 90.3 | 107.6 | 72.7 | 108.8 |
| 1.67% | 98.9 | 117.9 | 79.3 | 118.7 | 92.1 | 109.8 | 74.5 | 111.5 |
| 1.4% | 99.6 | 118.7 | 68.6 | 102.7 | 92.0 | 109.7 | 69.2 | 103.6 |
| 1.25% | 84.7 | 100.9 | 65.4 | 97.9 | 83.6 | 99.6 | 68.1 | 101.9 |
| 1.1% | 83.5 | 99.5 | 67.4 | 100.8 | 85.1 | 101.4 | 66.9 | 100.1 |
| 1.0% | 82.9 | 98.8 | 66.1 | 98.9 | 83.7 | 99.8 | 67.4 | 100.9 |

In green-house tests the 10% concentration of the solution means in case of benzofurans a dosage of 5 liters/ha related to an emulsifiable concentrate of 25% by weight, and the 10% 2-chloroethyl phosphonic acid solution also means 5 liter/ha related to a 40% by weight emulsifiable concentrate. In diluted solutions the ratio of the active ingredient is decreasing as given.

Table 1 shows that both A) and B) are active as plant growth regulating agents, the 10% solution kills the plants and by decreasing the concentration of both active ingredients to a certain value the height of both plants is increased. Solutions of lower concentration than 1.4% have substantially no effect upon the height of the plants.

Field test results are shown in Table 2 by demonstrating the effect upon the height of sunflower and corn.

TABLE 2

|  | Sunflower | | Corn | |
|---|---|---|---|---|
|  | cm. | % | cm. | % |
| Control | 60.8 | 100.0 | 95.1 | 100.0 |
| B) 4% solution | 76.3 | 125.5 | 109.6 | 115.2 |
| 2% solution | 75.0 | 123.3 | 102.1 | 107.4 |
| 1% solution | 73.0 | 120.1 | 93.7 | 98.5 |
| B) 4% solution+ A) 4% solution | 32.5 | 53.5 | 69.9 | 73.5 |
| B) 4% solution+ A) 2% solution | 40.0 | 65.8 | 74.6 | 78.4 |
| B) 4% solution+ A) 1% solution | 43.3 | 71.2 | 70.3 | 73.9 |
| B) 2% solution+ A) 4% solution | 30.3 | 49.8 | 77.4 | 81.2 |
| B) 2% solution+ A) 2% solution | 40.3 | 66.3 | 79.9 | 84.0 |
| B) 2% solution+ A) 1% solution | 48.9 | 80.4 | 84.6 | 88.9 |
| B) 1% solution+ A) 4% solution | 30.9 | 50.8 | 71.3 | 74.9 |
| B) 1% solution+ A) 2% solution | 41.3 | 67.9 | 78.7 | 82.7 |
| B) 1% solution+ A) 1% solution | 48.9 | 80.4 | 84.2 | 88.5 |

The data of Table 2 show that as a result of the two active ingredients used in conjunction the height influencing activity increased.

In Table 3 field test results are shown as a function of the change of the grain weight of corn-ears, of 1000 grain-weight and the height of the corn.

**0 140 904**

TABLE 3

| | Plant height | | Thousand grain weight g. | | Grain weight per corn-ear | |
|---|---|---|---|---|---|---|
| | cm. | %. | g. | % | g. | % |
| Control | 190 | 100.0 | 271 | 100.0 | 137.9 | 100.0 |
| B) 1.5 l/ha | 205 | 107.8 | 268 | 98.9 | 140.1 | 101.6 |
| A) 1.5 l/ha | 196 | 103.1 | 259 | 95.6 | 135.8 | 98.5 |
| B) 1.5 l/ha+ A) 1.5 l/ha | 176 | 92.6 | 245 | 90.4 | 133.2 | 96.6 |
| B) 3.0 l/ha+ A) 1.5 l/ha | 157 | 82.6 | 236 | 87.1 | 130.1 | 94.3 |
| B) 1.5 l/ha+ Cu-, Zn-, Mg-, Mn-, Mo-, B- -chelate+S 1.0 l/ha + urea 5 kg/ha | 217 | 114.2 | 286 | 105.5 | 143.9 | 104.4 |
| A) 1.5 l/ha+ Cu-, Zn-, Mg-, B -chelate+S 1.0 l/ha + urea 5 kg/ha | 178 | 93.7 | 272 | 100.4 | 139.2 | 100.2 |
| B) 1.5 l/ha+ A) 1.5 l/ha+ Cu-, Zn-, Mg-, Mn-, Mo-, B- -chelate+S 1.0 l/ha + urea 5 kg/ha | 168 | 88.4 | 274 | 101.1 | 149.7 | 108.6 |
| B) 3.0 l/ha+ A) 1.5 l/ha+ Cu-, Zn-, Mg-, Mn-, Mo-, B- -chelate+S 1.0 l/ha + urea 5 kg/ha | 166 | 87.4 | 277 | 102.2 | 138.4 | 100.4 |

The effect produced upon the plant height can be seen on the basis of the data of Table 3. The result in case of 1000 grain weight is especially important as due to this result the depression can be eliminated when using a composition in conjunction with microelements. The grain weight per corn-ear increases only if the active ingredients according to the invention are combined with each other at the given dosage.

In Table 4 the effect upon plant height of the sunflower and upon the fruit components in field tests is shown.

7

TABLE 4

| | Plant height | | Thousand achene weight | | Achene weight per plate | |
|---|---|---|---|---|---|---|
| | cm. | % | g. | % | g. | % |
| Control | 98.6 | 100.0 | 37.9 | 100.0 | 43.20 | 100.0 |
| B) 1.5 l/ha | 109.4 | 111.1 | 38.6 | 101.8 | 44.54 | 103.1 |
| A) 1.5 l/ha | 81.4 | 82.6 | 32.6 | 86.0 | 43.50 | 100.7 |
| B) 1.5 l/ha+ A) 1.5 l/ha | 67.9 | 68.9 | 30.8 | 81.3 | 45.19 | 104.6 |
| B) 3.0 l/ha+ A) 1.5 l/ha | 64.6 | 65.6 | 31.4 | 82.8 | 40.80 | 94.4 |
| B) 1.6 l/ha+ Cu-, Zn-, Mg-, Mn-, Mo-, B- -chelate+S 1.0 l/ha + urea 5 kg/ha | 80.1 | 81.3 | 40.6 | 107.1 | 47.04 | 108.9 |
| A) 1.5 l/ha+ Cu-, Zn-, Mg-, B- -chelate+S 1.0 l/ha + urea 5 kg/ha | 74.3 | 75.4 | 38.4 | 102.1 | 45.93 | 106.3 |
| B) 1.5 l/ha+ A) 1.5 l/ha+ Cu-, Zn-, Mg-, Mn-, Mo-, B- -chelate+S 1.0 l/ha + urea 5 kg/ha | 78.2 | 79.4 | 41.7 | 110.2 | 49.42 | 114.4 |
| B) 3.0 l/ha+ A) 1.5 l/ha+ Cu-, Zn-, Mg-, Mn-, Mo-, B- -chelate+S 1.0 l/ha | 72.4 | 73.5 | 39.3 | 103.7 | 46.59 | 107.8 |

Table 4 shows that the extent of the height decrease is smaller when combining the active ingredient components according to the invention. The increase of the 1000 achene weight and of the achene weight per plate as a result of the treatment according to the invention is significant.

## Claims

1. Process for regulating the growth of field plants, which comprises treating the plants in the vegetative stage at an application rate of 0.3 to 4.0 kg/ha with 2,2 - dimethyl - 2,3 - dihydro - 7 - hydroxy - benzofuran and/or 2,2 - dimethyl - 2,3 - dihydro - 3 - keto - 7 - hydroxy - benzofuran and at an application rate of 0.5—5.0 liters/ha with water soluble salts or metal chelates of a concentration of 5—500

g/l containing micro- and/or mesoelements namely sulphur in the sulphate form, boron, magnesium, manganese, copper, zinc, and molybdenum and simultaneously or previously with 2 - chloroethyl - phosphonic acid or esters thereof or salts thereof at a rate of 0.5—3.0 kg/ha.

2. Process as claimed in claim 1, which comprises treating the plants with a diluted composition containing active ingredients according to claim 1.

3. Process as claimed in claim 1, which comprises treating the crops at the latest until the appearance of the second node (1 or 1.5 cm height of ear).

4. Process as claimed in claim 1, which comprises treating the corn at 8 leaf stage, i.e. until the start of the differentiation of the growing cone.

5. Process as claimed in claim 1, which comprises treating the sunflower at 6—8 pair leaf stage until the termination of the receptacle formation.

6. Plant growth regulating composition for regulating the growth of field plants in the vegetative stage, which comprises containing 1—60% by weight of 2,2 - dimethyl - 2,3 - dihydro - 7 - hydroxy - benzofuran and/or 2,2 - dimethyl - 2,3 - dihydro - 3 - keto - 7 - hydroxy - benzofuran, in the form of soluble salts and chelates micro- and/or mesoelements namely boron, magnesium, sulphur in the sulphate form, manganese, copper, zinc, molybdenum and 2-chloroethyl phosphonic acid, salts or esters thereof, optionally urea or ammonium salt, solid and/or liquid carriers and optionally surfactants.

## Patentansprüche

1. Verfahren zur Wachstumsregulierung von Nutzpflanzen, dadurch gekennzeichnet, daß die Pflanzen im vegetativen Stadium mit 2,2 - Dimethyl - 2,3 - dihydro - 7 - hydroxy - benzofuran und/oder 2,2 - Dimethyl - 2,3 - 3 - keto - 7 - hydroxy - benzofuran in einer Aufwandsmenge von 0,3 bis 4,0 kg/ha und mit wasserlöslichen Salzen oder Metallchelaten in einer Konzentration von 5 bis 500 g/l, die Mikro- und/oder Mesoelemente, nämlich, Schwefel in Form von Sulfat, Bor, Magnesium, Mangan, Kupfer, Zink und Molybdän enthalten, in einer Menge von 0,5 bis 5,0 l/ha, und gleichzeitg oder vorgängig mit 2-Chlorethylphosphonsäure oder deren Estern oder Salzen in einer Menge von 0,5 bis 3,0 kg/ha behandelt werden.

2. Verfahren nach Anspruch 1, dadurch gekennzeichnet, daß die Pflanzen mit einer verdünnten Zusammensetzung behandelt werden, die die Wirkstoffe nach Anspruch 1 enthält.

3. Verfahren nach Anspruch 1, dadurch gekennzeichnet, daß die Kulturen spätestens vor der Bildung des zweiten Knotens (1 bis 1,5 cm Ährenhöhe) behandelt werden.

4. Verfahren nach Anspruch 1, dadurch gekennzeichnet, daß der Mais im 8-Blattstadium vor Beginn der Ausbildung des Blütenbodens behandelt wird.

5. Verfahren nach Anspruch 1, dadurch gekennzeichnet, daß die Sonnenblumen im 6-8- Blattpaarstadium vor Beendigung der Bildung des Fruchtbodens behandelt werden.

6. Zusammensetzung zur Wachstumsregulierung von Nutzpflanzen im vegetativen Stadium, dadurch gekennzeichnet, daß sie 1—60 Gew.-% 2,2 - Dimethyl - 2,3 - dihydro - 7 - hydroxy - benzofuran und/oder 2,2 - Dimethyl - 2,3 - dihydro - 3 - keto - 7 - hydroxy - benzofuran, Mikro- und/oder Mesoelemente, nämlich Bor, Magnesium, Schwefel in Sulfatform, Mangan, Kupfer, Zink und Molybdän, in Form von löslichen Salzen oder Chelaten, 2-Chlorethylphosphonsäure, bzw. deren Salze oder Ester, gegebenenfalls Harnstoff oder Ammoniumsalz, feste und/oder flüssige Träger und gegebenenfalls Tenside enthält.

## Revendications

1. Procédé pour la régulation de la croissance des plantes de culture, qui comprend le traitement des plantes à l'état végétatif, à une dose d'application de 0,3 à 4,0 kg/ha avec le 2,2 - diméthyl - 2,3 - dihydro - 7 - hydroxybenzofuranne et/ou le 2,2 - diméthyl - 2,3 - dihydro - 3 - céto - 7 - hydroxybenzofuranne, et à une dose d'application de 0,5—5,0 litres/ha avec des sels solubles dans l'eau ou des chélates métalliques à une concentration de 5—500 g/l, contenant des micro- et/ou des méso-éléments, à savoir le soufre sous la forme sulfate, le bore, le magnésium, le magnanèse, le cuivre, le zinc et le molybdène, et simultanément ou préalablement avec l'acide 2 - chloroéthyl - phosphonique ou ses esters ou ses sels à une dose de 0,5—3,0 kg/ha.

2. Procédé selon la revendication 1, qui comprend le traitement des plantes avec une composition diluée contenant les ingrédients actifs selon la revendication 1.

3. Procédé selon la revendication 1, qui comprend le traitement des cultures au plus tard jusqu'à l'apparition du second noeud (hauteur de 1 ou 1,5 cm de l'épi).

4. Procédé selon la revendication 1, qui comprend le traitement du maïs au stade de la huitième feuille, c'est-à-dire jusqu'au début de la différentiation du cône de croissance.

5. Procédé selon la revendication 1, qui comprend le traitement du tournesol au stade de la 6—8ème paire de feuilles jusqu'à la fin de la formation du réceptacle.

6. Composition régulatrice de la croissance des plantes pour la régulation de la croissance des plantes de culture à l'état végétatif, qui comprend de 1 à 60% en poids de 2,2 - diméthyl - 2,3 - dihydro - 7 - hydroxybenzofuranne et/ou de 2,2 - diméthyl - 2,3 - dihydro - 3 - cétone - 7 - hydroxybenzofuranne, sous la forme de sels solubles et de chélates des micro- et/ou des méso-éléments, à savoir le bore, le magnésium, le soufre sous la forme de sulfate, le manganèse, le cuivre, le zinc, le molybdène et de l'acide 2 - chloroéthyl - phosphonique, ses sels ou ses esters, éventuellement de l'urée ou un sel d'ammonium, des véhicules solides et/ou liquides et éventuellement des agents tensio-actifs.